(19) Europäisches Patentamt
European Patent Office
Office européen des brevets

(11) **EP 2 354 983 A1**

(12) **EUROPEAN PATENT APPLICATION**

(43) Date of publication:
**10.08.2011 Bulletin 2011/32**

(51) Int Cl.:
***G06F 17/30*** (2006.01)

(21) Application number: **11153260.2**

(22) Date of filing: **03.02.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **03.02.2010 US 301086 P**<br><br>(71) Applicant: **Research In Motion Limited**<br>**Waterloo, ON N2L 3W8 (CA)** | (72) Inventors:<br>• **Vanden Heuvel, David Noel**<br>**Kanata Ontario K2K 3K1 (CA)**<br>• **Shaib, Wadih Jean**<br>**Kanata Ontario K2K 2A5 (CA)**<br>• **Doucet, Heloise Rose**<br>**Kanata Ontario K2K 2A5 (CA)**<br><br>(74) Representative: **Fennell, Gareth Charles**<br>**Kilburn & Strode LLP**<br>**Electronics**<br>**20 Red Lion Street**<br>**London, Greater London WC1R 4PJ (GB)** |

(54) **System and method of enhancing user interface interactions on a mobile device**

(57)  The technology provides methods and devices for enhancing user interface interactions on mobile devices (200). The technology includes accessing a plurality of data sets (510,520,530), each data set of the plurality of data sets having corresponding data items (502) and selecting at least one data item characteristic for the corresponding data items. Metric information is calculated from the selected data item characteristics, the calculated metric information is aggregated for the corresponding data items (502) and a value is assigned to each corresponding data item (502) based on the aggregated metric information. A feature of at least one corresponding data item (502) is modified based on the assigned value (S706) and a combined visualization of the modified data items accessed from the plurality of data sets is generated to display the modified data items (S712). The combined visualization includes a data cloud of the data items accessed from the plurality of data sets. Font size and font colors are assigned to the data items based on a value assigned to the data items (S708).

FIG. 8

**Description**

**CROSS REFERENCE TO RELATED APPLICATIONS**

This application claims the benefit of United States Provisional Patent Application No. 61/301,806, filed February 3, 2010, entitled TRENDING CLOUD, the content of which is hereby incorporated by reference in its entirety.

**FIELD OF THE TECHNOLOGY**

The disclosure relates to displaying content on a mobile device. More particularly, the disclosure relates to displaying a visual representation of data items on a mobile device.

**BACKGROUND**

With the advent of more robust electronic systems, advancements of electronic devices are becoming more prevalent. Electronic devices can provide a variety of functions including, for example, telephonic functions, electronic messaging functions and other personal information manager (PIM) application functions. Handheld electronic devices can include mobile stations, such as cellular telephones, smart telephones, personal digital assistants (PDAs), laptop computers, and desktop computers.

Such electronic devices allow the user to interact with content on a user interface, including content related to text messages, email messages, address books, calendars, task lists, word processing documents and browser content. The limited user interface display area on the mobile stations generally results in disappointing user experiences compared to user interface interactions performed on office or home-based computer systems. Generally, the greater the amount of client application data that is generated for concurrent display on the mobile station, the more difficult it is to view or interact with the client application data on the mobile station user interface. In other words, the limited user interface display area on the mobile device user interface may restrict the type of actions that may be performed on the mobile station, including data viewing, data browsing or data searching. What is needed is a technology that enhances user interface interactions on the mobile station.

**BRIEF DESCRIPTION OF THE DRAWINGS**

FIG. 1 illustrates a communication system for mobile communication devices according to one embodiment of the technology;
FIG. 2 illustrates a mobile communication device according to one embodiment of the technology;
FIG. 3 illustrates a block diagram of the mobile communication device illustrated in FIG. 2, according to one embodiment of the technology;
FIG. 4 illustrates a word cloud having a word-within-a-word configuration, according to one embodiment of the technology;
FIG. 5 illustrates a visual representation of three data sets according to one embodiment of the technology;
FIG. 6 illustrates a visual representation of data items for display on a mobile device user interface according to one embodiment of the technology;
FIG. 7 illustrates a process diagram for generating a visual representation of data items according to one embodiment of the technology; and
FIG. 8 illustrates a visual representation of data items for display on a mobile device user interface according to another embodiment of the technology.

**DETAILED DESCRIPTION**

Reference will now be made in detail to embodiments of the technology. Each example is provided by way of explanation of the technology only, not as a limitation of the technology. It will be apparent to those skilled in the art that various modifications and variations can be made in the technology without departing from the scope or spirit of the technology. For instance, features described as part of one embodiment can be used on another embodiment to yield a still further embodiment. Thus, it is intended that the technology cover such modifications and variations that come within the scope of the technology.

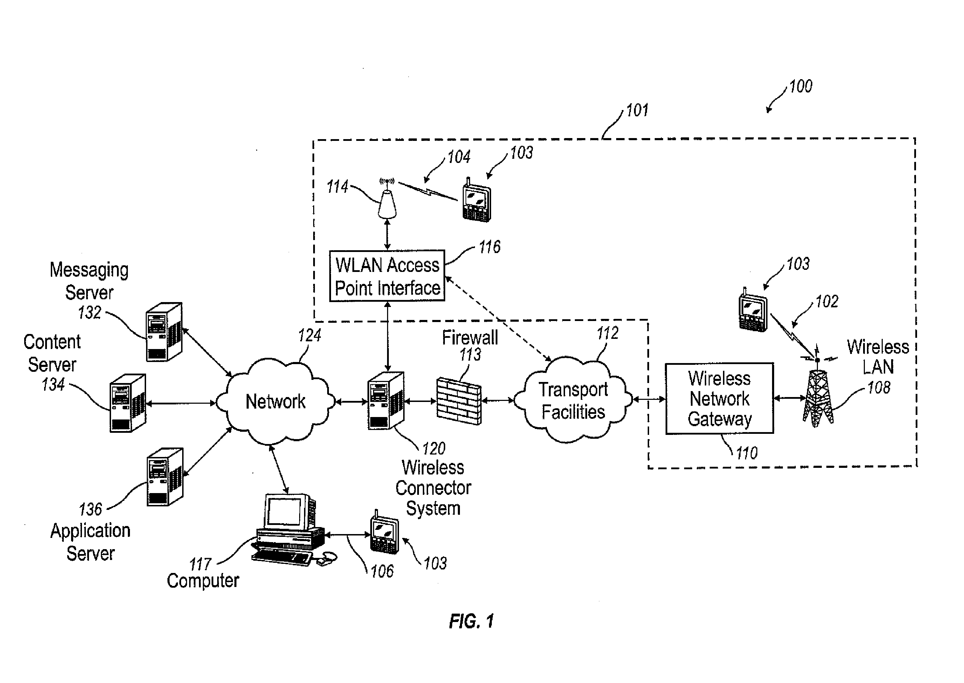

FIG. 1 illustrates an exemplary embodiment of an operating environment for a communication system 100 that may include a number of mobile communication devices 103. The communication system 100 may be coupled to the mobile communication devices 103 in any of several different ways. The mobile communication devices 103 may be coupled to a wireless network 101, such as one or more of a Wireless Wide Area Network (WWAN) 102 and a Wireless Local Area Network (WLAN) 104, among other suitable network arrangements. In some embodiments, the mobile communication devices 103 may be configured to communicate over both the WWAN 102 and WLAN 104, and to roam between these networks. In some embodiments, the wireless network 101 may comprise multiple WWANs 102 and WLANs 104, among other configurations.

The WWAN 102 may be implemented as any suitable wireless access network technology. By way of example, but not limitation, the WWAN 102 may be implemented as a wireless network that includes a number of transceiver base stations 108 (one of which is shown in FIG. 1), where each of the base stations 108 provide wireless Radio Frequency (RF) coverage to a corresponding area or cell. The WWAN 102 typically is operated by a mobile network service provider that provides subscription packages to users of the mobile communication devices 103. In some embodiments, the WWAN 102 may conform to one or more of the following wireless network types: Mobitex Radio Network; DataTAC; GSM (Global System for Mobile Communication); GPRS (General Packet Radio System); TDMA (Time Division Multiple Access); CDMA (Code Division Multiple Access); CDPD (Cellular Digital Packet Data); iDEN (integrated Digital Enhanced Network); Ev-DO (Evolution-Data Optimized); CDMA2000; EDGE (Enhanced Data rates for GSM Evolution); UMTS (Universal Mobile Telecommunication Systems); HSPDA (High-Speed Downlink Packet Access); IEEE 802.16e (also referred to as Worldwide Interoperability for Microwave Access or "WiMAX"), or various other networks. While WWAN 102 is described herein as a "Wide-Area" network, that term is intended also to incorporate wireless Metropolitan Area Networks (WMAN) or other similar technologies for providing coordinated service wirelessly over an area larger than that covered by typical WLANs.

The WWAN 102 may communicate with a wireless network gateway 110 that couples the mobile communication devices 103 to transport facilities 112. The transport facilities 112 couple the mobile communication devices 103 to a wireless connector system 120. The transport facilities 112 may include one or more private networks or lines, the Internet, a virtual private network, or any other suitable network, among other transport facilities. The wireless connector system 120 may be operated, for example, by an organization or enterprise such as a corporation, university, or governmental department, among other organizations or enterprises, which allow access to a network 124, such as an internal or enterprise network (e.g., an intranet) and its resources. Alternatively, the wireless connector system 120 may be operated by a mobile network provider. In some embodiments, the network 124 may be realized using the Internet rather than, or in addition to, an internal or enterprise network.

The wireless network gateway 110 provides an interface between the wireless connector system 120 and the WWAN 102. The wireless network gateway 110 facilitates communication between the mobile communication devices 103 and other devices (not shown) that may be connected, directly or indirectly, to the WWAN 102. Accordingly, communications sent via the mobile communication devices 103 are transported via the WWAN 102, the wireless network gateway 110 and the transport facilities 112 to the wireless connector system 120. Communications sent from the wireless connector system 120 are received by the wireless network gateway 110 and transported via the WWAN 102 to the mobile communication devices 103.

According to one embodiment, the WLAN 104 includes a wireless network that conforms to IEEE 802.11x standards (sometimes referred to as Wi-Fi TM) such as, for example, the IEEE 802.11a, 802.11b and/or 802.11g standard. One of ordinary skill in the art will readily appreciate that other communication protocols may be used for the WLAN 104, such as, IEEE 802.11n, IEEE 802.16e (also referred to as Worldwide Interoperability for Microwave Access or "WiMAX"), or IEEE 802.20 (also referred to as Mobile Wireless Broadband Access), among other communication protocols. The WLAN 104 includes one or more wireless RF Access Points (AP) 114 (one of which is shown in FIG. 1) that collectively provide a WLAN coverage area.

The WLAN 104 may be a user's personal network, an enterprise network, or a hotspot offered by an Internet service provider (ISP), a mobile network provider, or a property owner in a public or semi-public area, for example. The access points 114 may be connected to an access point (AP) interface 116 that may connect to the wireless connector system 120 directly or indirectly. A direct connection may be provided when the access point 114 is part of an enterprise WLAN 104 in which the wireless connector system 120 resides. An indirect connection may be provided via the transport facilities 112, as indicated by the dashed signal line in FIG. 1, if the access point 114 is a personal Wi-Fi network or Wi-Fi hotspot. In this case, a mechanism, such as a virtual private network (VPN), may be used for securely connecting to the wireless connector system 120. The AP interface 116 may provide translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email, Hypertext Transfer Protocol (HTTP), and HTTP Secure (HTTPS) communications to and from a set of managed mobile communication devices 103. The wireless connector system 120 also provides administrative control and management capabilities over users and mobile communication devices 103 that may connect to the wireless connector system 120.

The wireless connector system 120 allows the mobile communication devices 103 to access the network 124 and connected resources and services such as a messaging server 132, for example, a Microsoft Exchange Server®, IBM Lotus Domino®, or Novell GroupWise™ email server; a content server 134 for providing content, such as Internet content or content from an organization's internal servers; application servers 136 for implementing server-based applications, such as instant messaging (IM) applications to mobile communication devices 103, and intranet file services; among other connected resources and services.

The wireless connector system 120 typically provides a secure exchange of data (e.g., email messages, personal information manager (PIM) data, and IM data) with the mobile communication devices 103. In some embodiments, communications between the wireless connector system 120 and the mobile communication devices 103 may be encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some embodiments, the private encryption key is stored only in the user's mailbox on the messaging server 132 and on the mobile communication device 103, and can typically be regenerated by the user on mobile communication devices 103. Data sent to the mobile communication devices 103 is encrypted by the wireless connector system 120 using the private encryption key retrieved from the user's mailbox. The encrypted data, when received on the mobile communication devices 103, is decrypted using the private encryption key stored in memory. Similarly, data sent to the wireless connector system 120 from the mobile communication devices 103 is encrypted using the private encryption key stored in the memory of the mobile communication device 103. The encrypted data, when received on the wireless connector system 120, is decrypted using the private encryption key retrieved from the user's mailbox.

The wireless network gateway 110 is adapted to send data packets received from the mobile communication device 103 over the WWAN 102 to the wireless connector system 120. The wireless connector system 120 then sends the data packets to the appropriate connection point such as the messaging server 132 or the content servers 134 or the application server 136, or a combination of these. Conversely, the wireless connector system 120 may send data packets received, for example, from the messaging server 132 or the content servers 134 or the application servers 136 or any combination of these, to the wireless network gateway 110 that then transmit the data packets to the destination mobile communication device 103. The AP interfaces 116 of the WLAN 104 provide similar sending functions between the mobile communication device 103, the wireless connector system 120 and network connection point, such as the messaging server 132, the content server 134, the application server 136, or any combination of these.

The network 124 may comprise a private local area network (LAN), metropolitan area network (MAN), wide area network (WAN), the public Internet or combinations thereof. The network 124 may include virtual networks constructed using any of these networks, alone or in combination. Alternatively, the mobile communication device 103 may connect to the wireless connector system 120 using a computer 117, such as a desktop or a notebook computer, via the network 124. A link 106 may be provided between the mobile communication device 103 and the computer 117 for exchanging information between the mobile communication device 103 and a computer 117 connected to the wireless connector system 120. The link 106 may include one or both of a physical interface or a short-range wireless communication interface.

The physical interface may comprise one or a combination of an Ethernet connection, a Universal Serial Bus (USB) connection, a Firewire™ (also known as an IEEE 1394 interface) connection, or other serial data connections, via respective ports or interfaces of the mobile communication device 103 and computer 117. The short-range wireless communication interface may be a personal area network (PAN) interface. A personal area network is a wireless point-to-point connection implemented without physical cables to connect the two end points. The short-range wireless communication interface may include one or a combination of an infrared (IR) connection, such as an Infrared Data Association (IrDA) connection, a short-range radio frequency (RF) connection, such as one specified by IEEE 802.15.1 or the BLUETOOTH special interest group, or IEEE 802.15.3a, also referred to as UltraWideband (UWB), or other PAN connection.

It will be appreciated that the above-described communication system 100 is provided for illustration purposes only. The above-described communication system 100 may be implemented using any of a multitude of network configurations for use with the mobile communication devices 103. Suitable variations of the communication system 100 will be readily appreciated by a person of ordinary skill in the art and are intended to fall within the scope of the present disclosure.

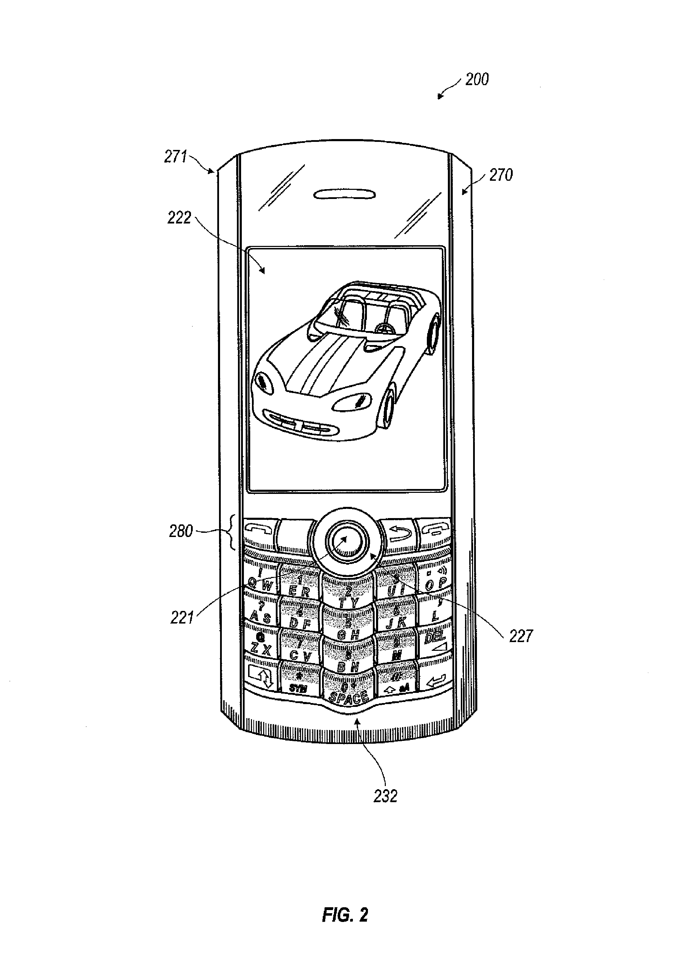

FIG. 2 illustrates an exemplary mobile communication device 200 having a user interface 222, such as a lighted display, positioned above a user input device, such as a keyboard 232 or other suitable device for accommodating textual input to the mobile communication device 200. The mobile communication device 200 includes a front face 270 having a navigation row 280. As shown, the mobile communication device 200 may include a uni-body construction, also known as a "candy-bar" design.

The mobile communication device 200 may include an auxiliary input device 227 that acts as a cursor navigation tool. The auxiliary input device 227 may be exteriorly located upon the front face 270 of the mobile communication device 200. The location of auxiliary input device 227 on the front face 270 allows the cursor navigation tool to be thumb-actuable, e.g., like the keys of the keyboard 232. Some embodiments provide the auxiliary input device 227 in the form of a trackball 221 that may be utilized to instruct two-dimensional screen cursor movement in substantially any direction. The auxiliary input device 227 may act as an actuator when the cursor navigation tool or trackball 221 is depressed like a button. Other embodiments can provide the auxiliary input device 227 in the form of a track pad, a touchpad, a pointing stick, a joystick, or a graphics tablet, among other auxiliary input devices. The auxiliary input device 227 may be placed above the keyboard 232 and below the user interface 222. In this location, the auxiliary input device 227 may avoid interference during keyboarding and does not block the operator's view of the user interface or display screen 222 during use.

The mobile communication device 200 may be configured to send and receive messages. According to one embodiment, the mobile communication device 200 includes a body 271 that may be configured to be held in one hand by an operator of the mobile communication device 200 during text entry. The user interface 222 is provided on the front face 270 of the body 271 to display information to the operator, e.g., during text entry. The mobile communication device 200 also may be configured to send and receive voice communications, such as mobile telephone calls. The mobile communication device 200 also can include a camera (not shown) to allow the mobile communication device 200 to capture digital photographs that can be referred to as photos or pictures.

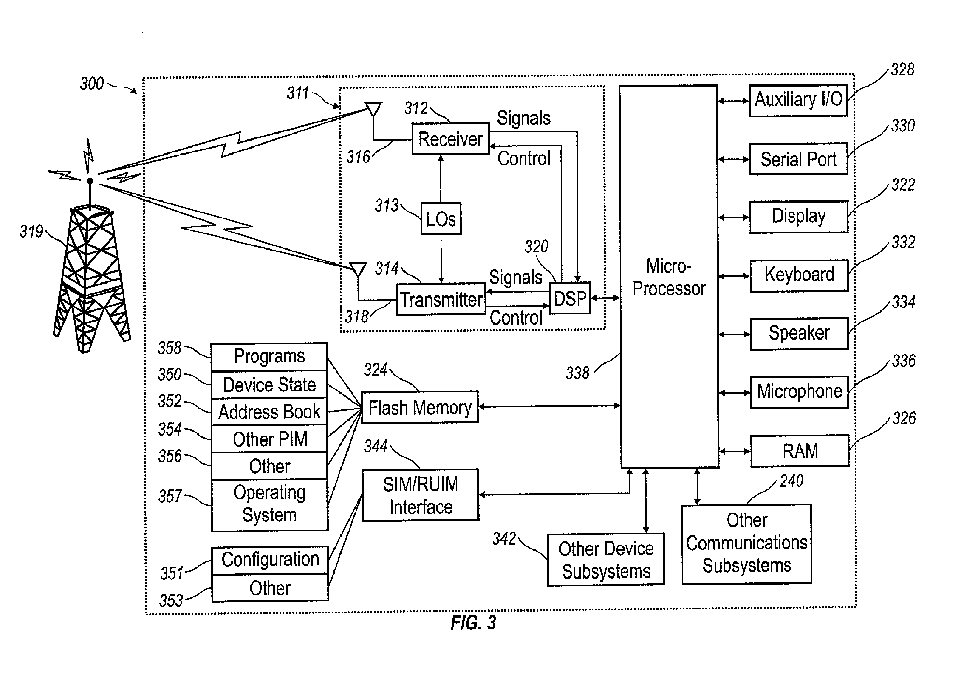

FIG. 3 illustrates a block diagram 300 of the mobile communication device 103, 200, in accordance with an exemplary embodiment. The mobile communication device 103, 200 includes a microprocessor 338 that controls operations of the mobile communication device 103, 200. A communication subsystem 311 is provided that performs communications, including transmission and reception, with the wireless network 319. The microprocessor 338 may be communicatively coupled to an auxiliary input/output (I/O) subsystem 328 of the mobile communication device 103, 200. In at least one embodiment, the microprocessor 338 may be communicatively coupled to a serial port 330, such as a Universal Serial Bus port, that enables communications with other devices or systems. The user interface or display 322 (e.g., user interface 222) may be communicatively coupled to the microprocessor 338 for displaying information to an operator of the mobile communication device 103, 200. When the mobile communication device 103, 200 is equipped with a keyboard 332 (e.g., keyboard 232), the keyboard 332 also may be communicatively coupled with the microprocessor 338. The mobile communication device 103, 200 may include a speaker 334, a microphone 336, a random access memory (RAM) 326, and a flash memory 324, among other components. These components may be communicatively coupled to the microprocessor 338. Other components may be provided on the mobile communication device 103, 200 and these other components may be optionally communicatively coupled to the microprocessor 338. Other communication subsystems 340 and other communication device subsystems 342 are generally indicated as being functionally connected with the microprocessor 338 as well. An example of a communication subsystem 340 includes a short range communication system, such as a BLUETOOTH® communication module or a WI-FI® communication module, such as a communication module in compliance with IEEE 802.11b, and associated circuits and components. Additionally, the microprocessor 338 may be configured to perform operating system functions and enable the execution of programs on the mobile communication device 103, 200. In some embodiments, less than all of the above components may be included in the mobile communication device 103, 200. For example, in at least one embodiment, the keyboard 332 is not provided as a separate component and is instead integrated with a touch screen as described below.

The auxiliary I/O subsystem 328 may take the form of a variety of different navigation tools, including multi-directional or single-directional navigation tools. The navigation tools may include a trackball navigation tool, a thumbwheel, a navigation pad, a joystick or a touch-sensitive interface, among other I/O interfaces. According to one embodiment, the navigation tool may include a trackball navigation tool 221, as illustrated in the exemplary embodiment shown in FIG. 2. These navigation tools may be located on the front surface of the mobile communication device 103, 200 or may be located on any exterior surface of the mobile communication device 103, 200.

Other auxiliary I/O subsystems may include external display devices and externally connected keyboards (not shown). While the above examples have been provided in relation to the auxiliary I/O subsystem 328, other subsystems capable of providing input or receiving output from the communication device 300 are considered within the scope of this disclosure. Additionally, other keys may be placed along the side of the mobile communication device 103, 200 to function as escape keys, volume control keys, scrolling keys, power switches, or user programmable keys, and may likewise be programmed accordingly.

The keyboard 332 may include a plurality of keys that are physical in nature, such as actuable buttons. Alternatively, the keyboard 332 may be virtual or software in nature, typically constituted by representations of physical keys on the user interface 422 (referred to herein as "virtual keys"). It is also contemplated that user input may be provided as a combination of these two types of keys. Each key of the plurality of keys may be associated with at least one action, which can be the input of a character, a command or a function. In this context, "characters" are contemplated to exemplarily include alphabetic letters, language symbols, numbers, punctuation, insignias, icons, pictures, or blank space, among other characters.

In the case of virtual keys, the indicia for the respective keys may be shown on the user interface or display screen 322. According to one embodiment, the virtual keys may be enabled by touching the display screen 322, for example, with a stylus, finger, or other pointer, to generate the character or activate the indicated command or function.

Some examples of display screens 322 capable of detecting a touch include resistive, capacitive, projected capacitive, infrared and surface acoustic wave (SAW) touch screens.

Physical and virtual keys may be combined in many different ways, as appreciated by those skilled in the art. In one embodiment, the physical and virtual keys may be combined, such that the plurality of enabled keys for a particular program or feature of the mobile communication device 103, 200 are shown on the display screen 322 in the same configuration as the physical keys. Using this configuration, the operator can select the appropriate physical key corresponding to what is shown on the display screen 322. Thus, the desired character, command or function is obtained by depressing the physical key corresponding to the character, command or function displayed at a corresponding position on the display screen 322, rather than touching the display screen 322.

Furthermore, the mobile communication device 103, 200 may be equipped with components that enable operation of various programs. According to one exemplary embodiment, a flash memory 324 may be provided to store an operating system 357, device programs 358, and data. The operating system 357 is generally configured to manage other programs 358. The programs 358 may be stored in the flash memory 324 and may be executable on the microprocessor 338. The operating system 357 honors requests for services made by the programs 358 through predefined program interfaces, among other request types. More specifically, the operating system 357 typically determines the order in which the multiple programs 358 are executed on the microprocessor 338. The operating system 357 also determines the execution time allotted for each program 358, manages sharing of the flash memory 324 among the multiple programs, handles input and output to and from other device subsystems 342, among performing other operations.

Additionally, operators may interact directly with the operating system 357 through a user interface. Interactions may be facilitated by input devices, including the keyboard 332 and the display screen 322. While in an exemplary embodiment of the operating system 357 may be stored in the flash memory 324, the operating system 357 in other embodiments may be stored in a read-only memory (ROM) or similar storage element (not shown). As those skilled in the art will appreciate, the operating system 357, device program 358 or parts thereof may be loaded in a RAM 326 or other volatile memory.

In some embodiments, the flash memory 324 may include programs 358 for execution on the mobile communication device 103, 200, including an address book 352, a personal information manager (PIM) 354, or a device state 350, among other programs. Furthermore, the programs 358 and other information 356, including data, may be segregated upon storage in the flash memory 324 of the mobile communication device 103, 200.

When the mobile communication device 103, 200 is enabled for two-way communication within the wireless communication network 319, it can send and receive signals from a mobile communication service. Examples of communication systems enabled for two-way communication include, but are not limited to, General Packet Radio Service (GPRS) networks; Universal Mobile Telecommunication Service (UMTS) networks; Enhanced Data for Global Evolution (EDGE) networks; Code Division Multiple Access (CDMA) networks; High-Speed Packet Access (HSPA) networks; Universal Mobile Telecommunication Service Time Division Duplexing (UMTS-TDD) networks; Ultra Mobile Broadband (UMB) networks; Worldwide Interoperability for Microwave Access (WiMAX) networks, or other networks that can be used for combined data and voice capabilities or separate data and voice capabilities. For the communication systems listed above, the mobile communication device 103, 200 may use a unique identifier to enable the mobile communication device 103, 200 to transmit and receive signals from the communication network 319. Other systems may not use such identifying information. For example, GPRS, UMTS, and EDGE use a Subscriber Identity Module (SIM) in order to allow communication with the communication network 319. Likewise, most CDMA systems use a Removable User Identity Module (RUIM) in order to communicate with the CDMA network. The RUIM and SIM card can be used in multiple different mobile communication devices 103, 200. The mobile communication device 103, 200 may be able to operate some features without a SIM/RUIM card, but it will not be able to communicate with the network 319. A SIM/RUIM interface 344 may be located within the mobile communication device 103, 200 to allow for removal or insertion of a SIM/RUIM card (not shown). The SIM/RUIM card features memory and may hold key configurations 351 and other information 353, such as identification and subscriber-related information. With a properly enabled mobile communication device 103, 200, two-way communication may be performed between the mobile communication device 103, 200 and the communication network 319.

If the mobile communication device 103, 200 is enabled as described above or the communication network 319 does not use such enablement, the two-way communication enabled mobile communication device 103, 200 may be configured to both transmit and receive information from the communication network 319. The communication transfer may be performed to or from the mobile communication device 103, 200. In order to communicate with the communication network 319, the mobile communication device 103, 200 may be equipped with an integral or internal antenna 318 for transmitting signals to the communication network 319. Likewise, the mobile communication device 103, 200 may be equipped with another antenna 316 for receiving communication from the communication network 319. According to one embodiment, these antennae (316, 318) may be combined into a single antenna (not shown). As one skilled in the art would appreciate, the antenna or antennae (316, 318) in another embodiment may be externally mounted on the mobile communication device 103, 200.

When equipped for two-way communication, the mobile communication device 103, 200 may include the communication subsystem 31 1that supports the operational needs of the mobile communication device 103, 200. The communication subsystem 311 may include a transmitter 314 and a receiver 312 including an associated antenna or antennae (316, 318) as described above, local oscillators (LOs) 313, and a processing module that in the presently described exemplary embodiment is a digital signal processor (DSP) 320.

It is contemplated that communication between the mobile communication device 103, 200 and the wireless network 319 may be any type of communication that both the wireless network 319 and mobile communication device 103, 200 are enabled to support. In general, these communications may be classified as voice and data communications. Voice communication generally refers to communication in which signals for audible sounds are transmitted through the communication network 319 by the mobile communication device 103, 200. Data communication generally refers to all other types of communication that the mobile communication device 103, 200 is capable of performing within the constraints of the wireless network 319.

FIGs. 1, 2 and 3 are exemplary only and those persons skilled in the art will appreciate that additional elements and modifications may be necessary to make the mobile communication device 103, 200 operate in particular network environments. The illustrated embodiments disclose the mobile communication devices 103, 200 as smart phones. Alternative embodiments contemplate that the communication devices 103, 200 may include personal digital assistants (PDA), tablet computers, laptop computers, desktop computers, servers, or other communication devices capable of sending and receiving electronic messages. According to one embodiment of the technology, the mobile communication devices 103, 200 and the corresponding mobile device infrastructure 300 may be characterized by an identification number that is assigned to the mobile communication device 103, 200. According to one embodiment, the identification numbers cannot be changed and are locked to each device.

Exemplary mobile or client applications that process data communications include email applications, contact storing applications or calendaring applications, among other client applications. For client applications, synchronizing with office or home-based versions of the client application can be desirable for either or both of their long term and short term utility. As an example, email communications are often time-sensitive, so substantially real time (or near-real time) synchronization may be desired. Contact processing communications, on the other hand, typically are less time-sensitive and can be updated less frequently without inconvenience. Therefore, the utility of the mobile communication device 103, 200 is enhanced when it is connectable within a communication system, such as when it is connectable on a wireless basis in a network 319 in which voice, text messaging, and other data transfer are accommodated. The mobile communication device 103, 200 may include additional client applications that interact with server applications, such as web browsers or file browsers, among other client applications.

The technology enhances user interface interactions with graphical user interfaces. According to one embodiment, the technology analyzes data items (or topics) obtained from a plurality of data sets (or lists) and generates a single visualization for display on a graphical user interface. For example, the technology may combine data item occurrences across two or more data sets to provide a single visual depiction of the multiple data sets. The single visual depiction may include graphical images that are adapted to be displayed on the mobile device user interface 222. In other words, the technology may generate a combined visualization of data items obtained from two or more data sets for display on a graphical user interface. Alternatively, the technology may generate a single visualization of data items obtained from a single data set for display on a graphical user interface. Still further, the technology may generate a single visualization of a set number of data items for display on a graphical user interface, wherein the set number of data items are selected based on pre-defmed criteria, such as a most frequently occurring data item (or topic) occurring over a pre-selected time period, among other pre-defined criteria.

According to one embodiment, the technology may generate a data cloud or word cloud for visually depicting data items across the selected data sets. Data item characteristics may be assigned to the data items to enable the technology to distinguish among the plurality of data items. In this regard, a data item may be associated with two or more data item characteristics, such as occurrence in a particular data set, time of data item creation, geographical location of data item creation or position within a data set, among other data item characteristics. Metrics may be calculated from the data item characteristics. The metrics may include data item frequency information or data item time of occurrence information, among other metrics. The metric information may be used to assign weight values or other values to the data item. The word cloud may be constructed to visually differentiate data items provided in a data set based on the weight values, or other values, of the data item characteristics.

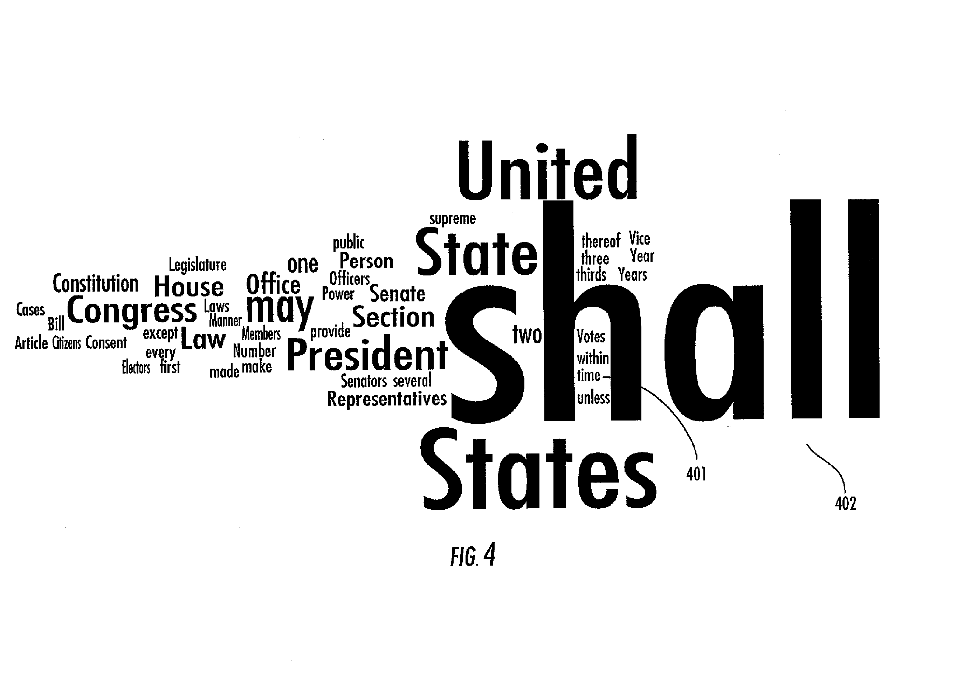

FIG. 4 illustrates an exemplary word cloud that visually depicts the fifty (50) most frequently-occurring words in the United States Constitution. According to one embodiment, the data items (or words) are assigned a physical size value (e.g., a font size) that corresponds to a selected data item metric (e.g., the frequency of occurrence) of the words in the data set (e.g., the U.S. Constitution). By way of example, if a data set includes the phrase "apple apple apple banana banana papaya," then a resulting word cloud based on frequency of occurrence may be constructed so that the word "banana" (data item) will physically appear in a font size that is twice the font size of the word "papaya" (data item), and the word "apple" (data item) will physically appear in a font size that is one and one half times the font size of the word "banana" (data item). According to one embodiment, the current technology may modify and display data item characteristics (e.g, size, color, etc.) based on a three-dimensional frequency including, for example, hourly, daily or weekly frequency, among other frequencies. By contrast, known technologies modify and display data item characteristics based on only one-dimensional frequency. Returning to FIG. 4, this word-within-a-word configuration displays the word "time" 401 within the letter "h" of the word "shall" 402. The word-within-a-word configuration is characteristic of a particular type of cloud (i.e., a "wordle") and provides one embodiment of the technology. The data items corresponding to the data set may include single words, symbols, or numbers, among other data items. Alternatively, the data items corresponding to the data set may include groups of words, symbols or numbers, among other data items.

The above-described concept for constructing a "word cloud" may be adapted to construct a "tag cloud" or "metadata cloud." Tags or metadata generally refer to non-hierarchical keywords or terms that are associated with digital items, such as digital images, web pages or computer files, among other digital items. The tags or metadata are associated with the digital items to enable a web browser or other search tool to locate the digital items using keyword searching. The tags or metadata may be assigned to the digital items informally and personally by the digital item's creator or by the digital item's viewer.

According to one embodiment, the tag clouds may be used to visually depict information, including web site content, search result information or document information, among other information. The tags in the tag cloud may be selected and organized to convey desired messages. To this end, the tags may be organized in various configurations. For example, the tags may be organized based on properties, such as an alphabetical order or a frequency of tag occurrences, among other properties. The tags in the tag cloud may include data items, such as single words, short phrases, acronyms or hyperlinks, among other data items. The tag clouds may be formed by parsing tag text and removing tags that add little value to the tag cloud, such as common words, numbers or punctuation, among other features. Regarding hyperlink tags located within a tag cloud, upon selection, the web browser may be directed to information associated with the corresponding hyperlink tag.

According to one embodiment, the technology provides a display-friendly manner for visually illustrating data items generated by micro-blogging services, such as Twitter™ or other micro-blogging service. For example, micro-blogging services may track micro-blogging posts over pre-selected time intervals and may extract information corresponding to the micro-blogging posts. The technology may receive information from the micro-blogging services to generate aggregate topic popularity information or otherwise rank topics relative to each other. The pre-selected time periods may include real-time, by-the-minute, hourly, daily, weekly, monthly or yearly time periods, among other pre-selected time periods. The technology may process information, such as topic popularity information, to generate topic trending information.

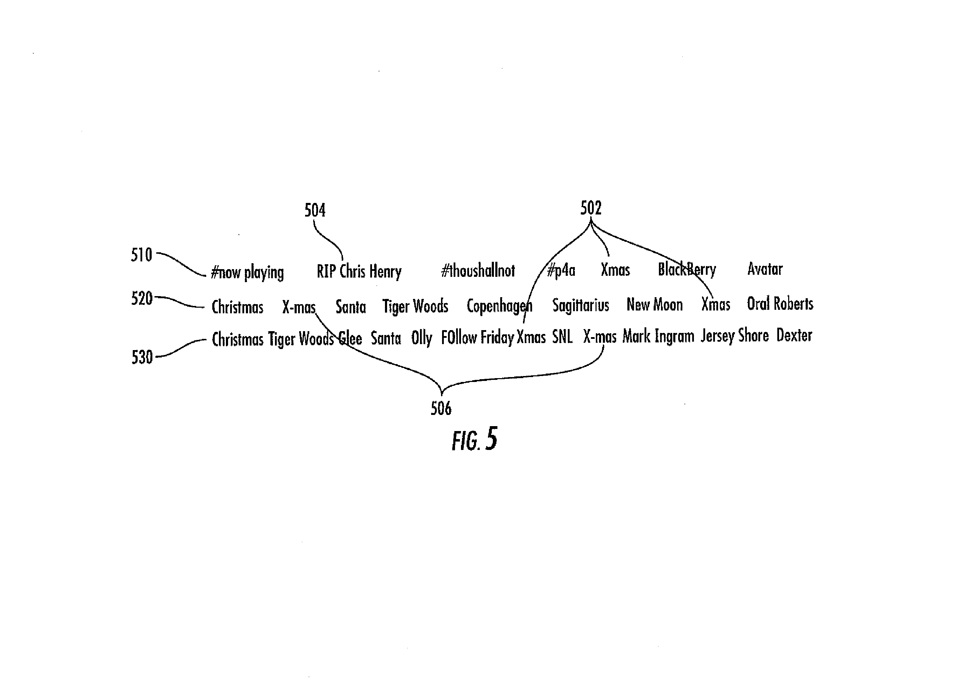

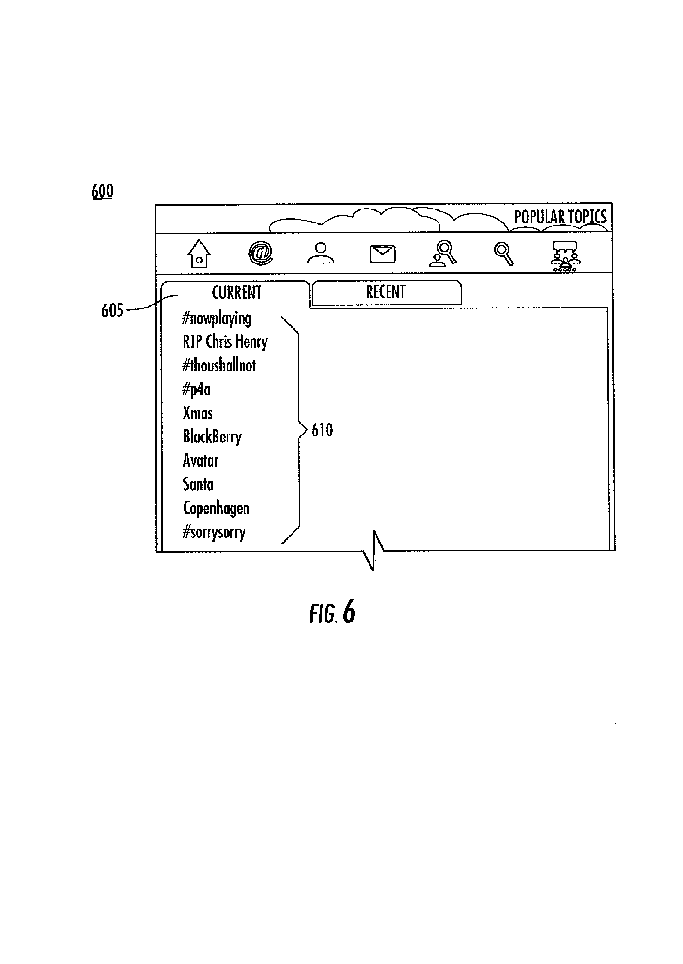

FIG. 5 illustrates three exemplary data item (or topic) trending information data sets (or lists) derived from micro-blogging services. The data sets represent trending information over different frequencies or time periods, including a current data item trending information data set 510, a daily data item trending information data set 520, and a weekly data item trending information data set 530. According to one embodiment, the trending information data sets may be configured for display on the mobile device user interface 222. FIG. 6 illustrates a screen shot of a client application user interface 600 with graphical images of a "Current" tab 605 and the current data item trending information data set 610. One of ordinary skill in the art will readily appreciate that the client application user interface may be configured differently.

Returning to FIG. 5, the data item trending information data sets may be constructed for a pre-selected number of data items (or topics). According to one embodiment, the current data item trending information data set may derive data item information from a first number of data items; the daily data item trending information data set may derive data item information from a second number of data items; and the weekly data item trending information data set may derive data item information from a third number of data items. The first number of data items, the second number of data items and the third number of data items may be different or the same.

The number of data items selected for display per data set may correspond to a length of time that is available in the pre-selected time period for gathering data item information. Other criteria may limit the number of data items selected for display per data set, including resources of the mobile communication device 103, 200, among other criteria. According to one embodiment, the technology may assemble: the current data item trending information data set 510, from available data items, to display ten (10) data items per data set; the daily data item trending information data set 520, from available data items, to display up to four hundred eighty (480) data items in a day or twenty (20) data items per data set per hour for twenty-four (24) hours; and the weekly data item trending information data set 530, from available data items, to display up to two hundred ten (210) data items per data set.

FIG. 5 illustrates that the data items (or topics) may appear across multiple data sets (or lists). For example, the "Xmas" data item 502 appears on each of the current data item trending information data set 510, the daily data item trending information data set 520 and the weekly data item trending information data set 530. Additionally, users may select any of the illustrated trending data items (or topics), such as the "RIP Chris Henry" data item 504, which causes the technology to display search results for the "RIP Chris Henry" data item across the micro-blogs that support the website. According to one embodiment, the most recent-in-time micro-blog post may be illustrated first.

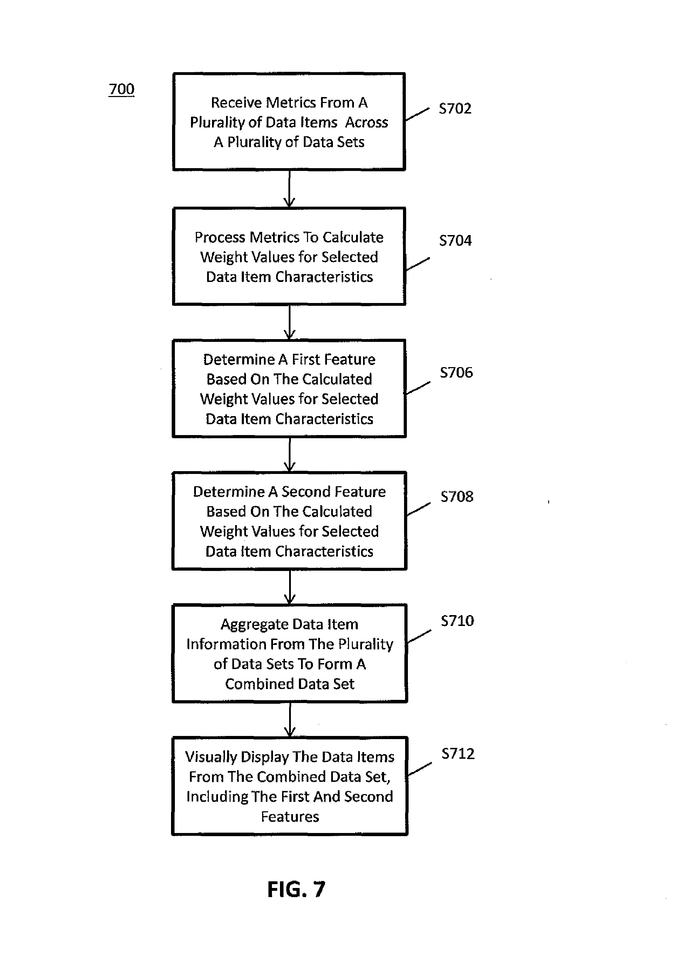

FIG. 7 illustrates a process diagram for a method 700 according to one embodiment of the technology. In step S702, metrics are accessed from a plurality of data items across a plurality of selected data sets. In step S704, the metrics are processed to calculate weight values for selected data item characteristics. According to one embodiment, the data items may be associated with at least one data item characteristic. The weight values for selected data item characteristics may be calculated based on predefmed criteria, including a number of data sets in which the data item appears or whether the data item appears more than once in a data set, among other predefined criteria. Accordingly, the weight value of a data item characteristic may be incremented for each data set in which the corresponding data item appears. The weight value of a data item characteristic may be incremented again for each data set in which the corresponding data item appears more than once.

Referring to FIG. 5, the "Xmas" data item 502 receives a weight value of five (5), calculated as follows: +1 for appearing on the current data item trending information data set 510; +1 for appearing on the daily data item trending information data set 520; +1 for appearing on the weekly data item trending information data set 530; +1 for appearing more than one time (not shown) on the daily data item trending information data set 520; and +1 for appearing more than one day (not shown) on the weekly data item trending information data set 530. Generally, where there are X data sets and Y data sets potentially having multiple entries of a same data item, a data item characteristic may have a calculated weight value from 1 to (X + Y). In FIG. 5, the daily data set 520 having hourly data items and the weekly data set 530 having daily data items fall into this category. Additionally, the weight value may be incremented based on the data items appearing concurrently across multiple data sets, with a value of: +1 for appearing concurrently across two data sets; +2 for appearing concurrently across three data sets; +3 for appearing concurrently across four data sets, and so on.

According to one embodiment, synonymous data items, such as the "Xmas" data item 502 and the "X-mas" data item 506, are counted as the same data item. Under this situation, the combined "Xmas" data items 502 and the "X-mas" data items 506 receive a weight value of seven (7), calculated as follows: +5 for the reasons discussed above with respect to the "Xmas" data items 506; +1 for appearing on the daily data item trending information data set 520 and +1 for appearing on the weekly data item trending information data set 530. Additionally, the weight value may be incremented based on the data items appearing concurrently across multiple data sets, with a value of: +1 for appearing concurrently across two data sets; +2 for appearing concurrently across three data sets; +3 for appearing concurrently across four data sets, and so on.

The weight values may be determined in a variety of fashions. In addition to the above examples, the weight values may be determined based on selected factors, such as a raw number of postings in a medium, such as a micro-blogging site, for a selected data item (or topic); a frequency count, such as incrementing a weight value for every time a data item appears in a data set; or other factors.

According to one embodiment, the technology may generate alerts for previously popular data items that share selected data item characteristics or fall under a same category. For example, data item A (or topic A) may have achieved a popular status over a six (6) hour period in a preceding twenty-four (24) hour period, while data item B (or topic B) may not have achieved popular status during the preceding twenty-four (24) hour period. However, data item B may have achieved popular status for a period of five (5) days over a preceding seven (7) day period. Based on a straight frequency count over the preceding 24 hours, data item A would rate higher in a popularity ranking compared to data item B. If data item A and data item B fall under a same category, for example, the technology may generate and display an alert notifying users of the recently popularity scores for data item B. The alert may be displayed alongside currently popular data items.

According to another embodiment, the technology may assign weight values or other values based on a weighted frequency count. For example, the technology may assign a weekly weight value, a daily weight value, or a current weight value to data items that occur during these specified time periods and are associated with monitored data sets.

According to yet another embodiment, the technology may calculate weight values, or other values, based on a particular time of a data item's occurrence. For example, more recent data item occurrences may be considered more relevant and therefore assigned a greater weight value than older data item occurrences. Accordingly, a weight value for a data item (or topic) may be the sum of (1/a time period since creation of the data set in which the data item occurs) *(1/rank on the data set in which the data item occurs). The time periods may include seconds, minutes, hours, days, weeks, months or years, among other time periods. For example, if data item A (or topic A) appears on the data set with a: #5 ranking for a previous one hour; #3 ranking for a previous three (3) hours; #2 ranking for a previous five (5) hours; and #1 ranking for a previous three (3) days, while data item B (or topic B) appears on the data set with a: #8 ranking for a previous one hour; #9 ranking for a previous three (3) hours; #1 ranking for a previous two (2) days; #1 ranking for a previous three (3) days; and #1 ranking for a previous four (4) days, the weight values may be assigned as follows using a time period of hours:

$$\text{Weight value for data item A} = (1/1)*(1/5) + (1/3)*(1/3) + (1/5)*(1/2) + (1/72)*(1/1) = 0.5249$$

$$\text{Weight value for data item B} = (1/1)*(1/8) + (1/3)*(1/9) + (1/48)*(1/1) + (1/72)*(1/1) +$$

$$(1/96)*(1/1) = 0.2071$$

According to another embodiment, the technology may calculate a greater weight value for data items with local rankings. For example, a weight value may be calculated using the following formula: (a/period of time) + (b/local rank), where "a" and "b" may have a different weight value or a same weight value. For example, "a" may equal 1 and "b" equal 1.5, giving extra weight value to the "b/local rank" metric. The time periods may include seconds, minutes, hours, days, weeks, months or years, among other time periods. While the value of "b" in the exemplary local rank quotient is shown to be "1.5," this number may be any value greater than the numerator ("a") of the time based quotient. Likewise, in another embodiment in which the time period ranking is given greater weight, "a" may equal 1.5 and "b" may equal 1 (or any value less than the value of "a").

Once weight values, or other values, are calculated for selected data item characteristics, visual features of the data items may be determined for display on the user interface. For example, data item features, including a font type, a font size, a font color (including hue and transparency), among other data item features, may be adjusted to visually distinguish among the data items. In step S706, a first feature, such as font size, is determined for the data items based on the calculated weight value of the data item characteristics. In step S708, a second feature, such as font color, is determined for the data items based on the calculated weight value of the data item characteristics. In other words, the technology modifies visual features of the data items across a plurality of data sets to visually highlight data item characteristics.

For example, the technology may assign a dark color (e.g., black) to data items occurring on the current data item trending information data set 510; a less dark color (e.g., medium blue) to data items not occurring on the current data item trending information data set 510, but occurring on the daily data item trending information data set 520; and a light color (e.g., light blue) to data items not occurring on either of the current data item trending information data set 510 or the daily item trending information data set 520. Other font color assignments indicating persistence and direction of trending may be implemented. Trending can be measured in a variety of ways.

For example, when multiple current data item trending information data sets 510 are aggregated to generate the daily data item trending information data set 520 or the weekly data item trending information data set 530, a least mean square slope of absolute counts over time may be used to determine trending. In this case, slope ranges may correspond to a font color, wherein a substantially positive slope may correspond to a darkest color; little or no slope (either positive or negative) may correspond to a second darkest color; and substantially negative slope may correspond to a third darkest color. According to one embodiment, if a calculated weight value results in two data items having a same aggregate weight, trending information may be used to differentiate the two data items. For example, a first data item may have rated highly five days ago, but has been trend declining in recent days. A second data item may have rated less highly 5 days ago, but has been trend increasing in recent days. The technology illustrates a variance in the slope of trending curves for the first and second data items using, for example, an alpha (transparency) difference in the font color, among other visual indicators. In step S710, data item information received from the plurality of data sets is aggregated to form a combined data set. In step S712, the data items that form the combined data set are visually displayed on the user interface 322 having at least the first feature and the second feature.

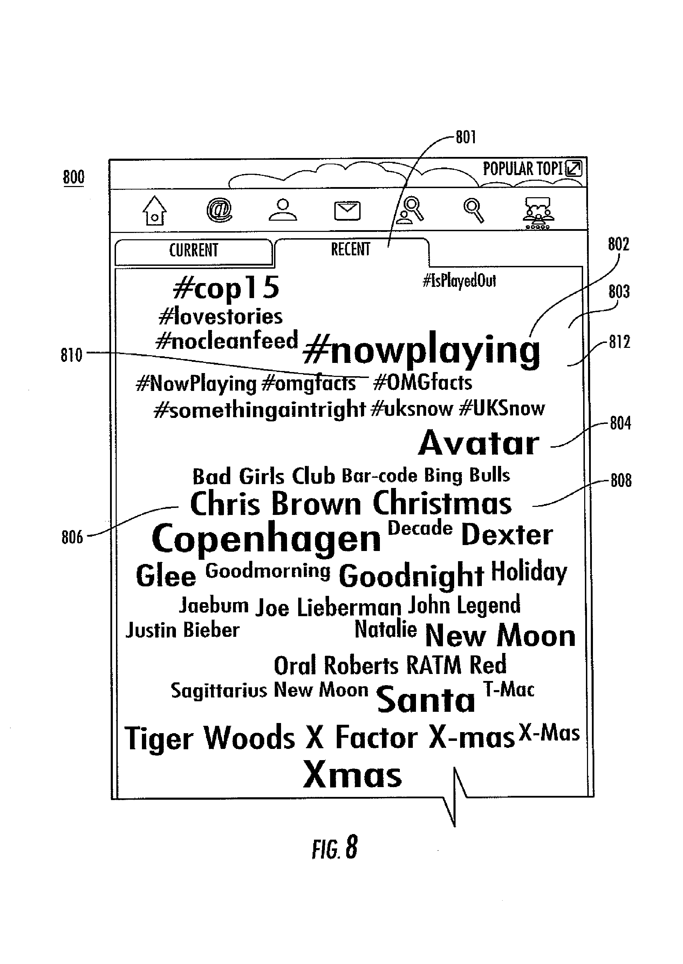

FIG. 8 illustrates a screen shot of a client application user interface 800 with graphical images of a "Recent" tab 801 and a single visual depiction of a data item trending information data set 803. According to one embodiment, the data items in the data item trending information data set 803 may be arranged in an alphabetical order, although other orders may be used. For example, a modified alphabetical order may be used, where the initial characters such as "#" may be ignored. According to one embodiment, the technology may display, in a single visualization, a combined listing of the current data item trending information data set 510 and all or portions of the daily data item trending information data set 510. Alternatively, the technology may display a single visualization of the current data item trending information data set 510. Still further, the technology may display, in a single visualization, a combined listing of a predefined number of data items have a selected criteria that occur over a predefined time period. Other display schemes may be employed.

According to one embodiment, the data items in the data item trending information data set 803 may be displayed on the client application user interface 800 having features that correspond to the assigned weight value for the data item characteristics. The features may include any of a font size, a font color (including hue and transparency), or a font type, among other features.

For example, the "#nowplaying" data item 802 and the "Avatar" data item 804 are displayed in a first largest font and a darkest color to visually illustrate a highest weight value and a most positive-trending data item compared to the other data items in the data item trending information data set 803. The "Chris Brown" data item 806 and the "Christmas" data item 808 are displayed in a second largest font to visually illustrate a weight value that is less than that of the "Avatar" data item 804. The "Chris Brown" data item 806 and the "Christmas" data item 808 are displayed in a medium color to visually indicate mid-level trending. The "#OMGfacts" data item 810 and the "#pickone" data item 812 are displayed in a fourth largest font size to visually illustrate a fourth level weight value. The "#OMGfacts" data item 810 is displayed in a same medium color as both the "Chris Brown" data item 806 and the "Christmas" data item 808 to visually illustrate a same level of positive trending as those data items. The "#pickone" data item 812 is displayed in a lightest color to visually illustrate a least positive trending. According to one embodiment, a scrolling window may be provided on the mobile communication device 103,300 to enable users to view the data item trending information data set 803 on the user interface 322.

According to one embodiment, the technology may include a client application that resides on the mobile communication device 103, 200 and is executable on the microprocessor 338. The client application may request information corresponding to the selected data items. The client application may process the received data item information, including the data item characteristics, to calculate weight values. Alternatively, the technology may include a client application that communicates with a remote server application to receive processed data from a remote server that includes calculated weight values.

The client application generates a single visual depiction of the data items for display on the mobile device user interface 422. In other words, the technology may generate a single visualization of data items obtained from two or more data sets for display on the mobile device user interface 422. Alternatively, the technology may generate a single visualization of data items obtained from a single data set for display on the mobile device user interface 422. Still further, the technology may generate a single visualization of a set number of data items for display on the mobile device user interface 422, wherein the set number of data items are selected based on pre-defmed criteria, such as a most frequently occurring data item or topic over a period, among other pre-defmed criteria.

The technology may be implemented using hardware or software in association with hardware. In some embodiments, the software may include firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the technology may take the form of a computer program product that includes program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

A data processing system suitable for storing a computer program product of the technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some embodiments, the data processing system is implemented using one or both of FFGAs and ASICs.

**Claims**

1. A computer-implemented method (700) of enhancing user interface interactions on a mobile device (200), the method comprising:

   accessing a plurality of data sets, each data set of the plurality of data sets having corresponding data items (S702);
   selecting at least one data item characteristic for the corresponding data items;
   calculating metric information from the selected data item characteristics;
   aggregating the calculated metric information for the corresponding data items (S710);
   assigning a value to each corresponding data item based on the aggregated metric information (S706);
   modifying a feature of at least one corresponding data item based at least on the assigned value;
   generating a combined visualization of the modified data items accessed from the plurality of data sets; and
   displaying the modified data items in the combined visualization (S712).

2. The computer-implemented method of Claim 1, wherein selecting the at least one data item characteristic for the corresponding data items comprises selecting at least one of an occurrence of the data items in a predefined data set, a creation time of the data items, a creation geographic location of the data items and an occurrence position of the data items within the corresponding data set.

3. The computer-implemented method of any one of Claims 1-2, wherein metrics comprise at least one of data item frequency information and data item time of occurrence information and wherein calculating the metric information from the selected data item characteristics comprises assigning a value to the selected data item characteristic.

4. The computer-implemented method of any one of Claims 1-3, wherein aggregating the calculated metric information for corresponding data items comprises summing the calculated metric information for the corresponding data items.

5. The computer-implemented method of any one of Claims 1-4, wherein modifying the feature of the data items comprises assigning at least one of a font size, a font color, a font hue and a font transparency.

6. The computer-implemented method of Claim 5, wherein displaying the modified data items in the combined visualization comprises displaying the data items with at least one of the assigned font size, font color, font hue, and font transparency.

7. The computer-implemented method of any one of Claims 1-6, further comprising creating a single combined data set from the plurality of data sets.

8. The computer-implemented method of Claim 7, wherein generating the combined visualization of the modified data items accessed from the plurality of data sets comprises displaying the single combined data set in a data cloud.

9. The computer-implemented method of any one of Claims 1-8, further comprising calculating a weight value for the selected data item characteristic (S704) based on at least one of a number of data sets in which the corresponding data item is present and a number of times the corresponding data item is present in the corresponding data set.

10. The computer-implemented method of any one of Claims 1-9, wherein the data item characteristics span a three-dimensional frequency including three frequencies selected from real-time, by-the-minute frequency, hourly frequency, daily frequency, weekly frequency, monthly frequency and yearly frequency.

11. The computer-implemented method of any one of Claims 9-10, wherein calculating the weight value for the selected data item characteristic (S704) includes incrementing the weight value based on data items appearing concurrently across the plurality of data sets.

12. The computer-implemented method of any one of Claims 1-11, further comprising applying trending information to differentiate the corresponding data items.

13. The computer-implemented method of any one of Claims 1-12, wherein the data items include hyperlink data items.

14. A computer program product provided on a computer readable medium, the computer program product comprising computer instructions which, upon execution by a processor (338) of a mobile device (200), cause the processor to execute the steps of the computer-implemented method of any one of claims 1-13.

15. A mobile communication device (200) for enhancing user interface interactions, the mobile communication device comprising:

   a processor (338) programmed to execute the steps of the computer-implemented method of any one of claims 1-13.

FIG. 1

**FIG. 2**

FIG. 3

Auxiliary I/O 328
Serial Port 330
Display 322
Keyboard 332
Speaker 334
Microphone 336
RAM 326

Other Communications Subsystems 240

Micro-Processor 338

Other Device Subsystems 342

Signals
Control
Receiver 312
Signals
Control
DSP 320
LOs 313
Transmitter 314
316
318
311

Flash Memory 324
SIM/RUIM Interface 344

Programs 358
Device State 350
Address Book 352
Other PIM 354
Other 356
Operating System 357

Configuration 351
Other 353

300
319

FIG. 4

504

502

510 — #now playing    RIP Chris Henry    #thoushallnot    #p4a    Xmas    BlackBerry    Avatar

520 — Christmas    X-mas    Santa    Tiger Woods    Copenhagen    Sagittarius    New Moon    Xmas    Oral Roberts

530 — Christmas Tiger Woods Glee  Santa  Olly  FOllow Friday Xmas  SNL  X-mas Mark Ingram Jersey Shore  Dexter

506

*FIG. 5*

EP 2 354 983 A1

600

POPULAR TOPICS

| CURRENT | RECENT |

605

#nowplaying
RIP Chris Henry
#thoushallnot
#p4a
Xmas
BlackBerry    610
Avatar
Santa
Copenhagen
#sorrysorry

FIG. 6

700

Receive Metrics From A
Plurality of Data Items Across
A Plurality of Data Sets

S702

Process Metrics To Calculate
Weight Values for Selected
Data Item Characteristics

S704

Determine A First Feature
Based On The Calculated
Weight Values for Selected
Data Item Characteristics

S706

Determine A Second Feature
Based On The Calculated
Weight Values for Selected
Data Item Characteristics

S708

Aggregate Data Item
Information From The Plurality
of Data Sets To Form A
Combined Data Set

S710

Visually Display The Data Items
From The Combined Data Set,
Including The First And Second
Features

S712

**FIG. 7**

FIG. 8

Europäisches
Patentamt

European
Patent Office

Office européen
des brevets

# EUROPEAN SEARCH REPORT

**Application Number**

EP 11 15 3260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/002363 A1 (MICROSOFT CORP [US]) 3 January 2008 (2008-01-03) * the whole document * ----- | 1-15 | INV. G06F17/30 |
| X | US 5 861 885 A (STRASNICK STEVEN LARRY [US] ET AL) 19 January 1999 (1999-01-19) * column 5, line 49 - column 6, line 23 * * column 9, line 37 - line 46 * ----- | 1-15 | |
| X | US 2004/153456 A1 (CHARNOCK ELIZABETH [US] ET AL) 5 August 2004 (2004-08-05) * the whole document * ----- | 1-15 | |
| X | WO 2006/113970 A1 (UNIV QUEENSLAND [AU]; SMITH ANDREW [AU]) 2 November 2006 (2006-11-02) * the whole document * ----- | 1-15 | |
| A | Gabriella Kazai , Mounia Lalmas , Thomas Rölleke: "Aggregated Representation for the Focussed Retrieval of Structured Documents", Citeseer SIGIR 2001 Workshop, Mathematical/Formal Methods in IR, 2001, XP002632948, New Orleans, USA Retrieved from the Internet: URL:http://citeseerx.ist.psu.edu/viewdoc/download?doi=10.1.1.21.1404&rep=rep1&type=pdf [retrieved on 2011-04-14] * the whole document * ----- | 1-15 | TECHNICAL FIELDS SEARCHED (IPC) G06F |

The present search report has been drawn up for all claims

| Place of search | Date of completion of the search | Examiner |
|---|---|---|
| Munich | 14 April 2011 | Eichenauer, Lars |

**ANNEX TO THE EUROPEAN SEARCH REPORT
ON EUROPEAN PATENT APPLICATION NO.**                EP 11 15 3260

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2011

| Patent document cited in search report | | Publication date | Patent family member(s) | | Publication date |
|---|---|---|---|---|---|
| WO 2008002363 | A1 | 03-01-2008 | CN<br>EP<br>JP<br>JP<br>US | 101473325 A<br>2035970 A1<br>4620167 B2<br>2009541895 T<br>2007299842 A1 | 01-07-2009<br>18-03-2009<br>26-01-2011<br>26-11-2009<br>27-12-2007 |
| US 5861885 | A | 19-01-1999 | NONE | | |
| US 2004153456 | A1 | 05-08-2004 | NONE | | |
| WO 2006113970 | A1 | 02-11-2006 | US | 2009327259 A1 | 31-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61301806 B